(19) Europäisches Patentamt
European Patent Office
Office européen des brevets

(11) **EP 2 017 837 A2**

(12) **EUROPEAN PATENT APPLICATION**

(43) Date of publication:
**21.01.2009 Bulletin 2009/04**

(51) Int Cl.:
*G11B 7/135* [(2006.01)]     *G11B 7/09* [(2006.01)]

(21) Application number: **08154838.0**

(22) Date of filing: **18.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.05.2007 JP 2007139255**

(71) Applicant: **Funai Electric Co., Ltd.**
**Daito-shi**
**Osaka 574-0013 (JP)**

(72) Inventor: **Ikeda, Atsushi**
**c/o FUNAI ELECTRIC CO., LTD.**
**Osaka 574-0013 (JP)**

(74) Representative: **Erny, Tobias**
**Beetz & Partner**
**Patentanwälte**
**Steinsdorfstrasse 10**
**80538 München (DE)**

(54) **Optical pickup device**

(57)     An optical pickup device has a spherical aberration correction mechanism and a control part performing a process for determining setting of the spherical aberration correction mechanism. The process includes an objective lens moving process of moving an objective lens with respect to an optical recording medium, a checking process of checking in which shift direction the timing when the reflection light quantity signal becomes a peak is shifted from the timing when an S-shaped curve of a focus error signal crosses zero by using the reflection light quantity signal and the focus error signal derived from a recording layer on which information is read or written obtained by the objective lens moving process, and a setting changing process of changing current setting of the spherical aberration correction mechanism in accordance with the shift direction checked in the checking process in the case where it is decided that setting of the spherical aberration correction mechanism should be changed from the current setting.

FIG. 1

Description

BACKGROUND OF THE INVENTION

Field of the Invention

The present invention relates to an optical pickup device for reading and writing information on an optical recording medium by projecting a light beam onto the same. In particular, the present invention relates to a structure of an optical pickup device having a spherical aberration correction mechanism used for correcting spherical aberration.

Description of Related Art

There are optical recording media including a compact disc (hereinafter referred to as a CD) and a digital versatile disc (hereinafter referred to as a DVD), which are widely available. Further, a study about high density recording on an optical recording medium has been carried out in order to increase information quantity recorded on the optical recording medium in recent years. As a result, optical recording media such as an HD-DVD and a Blu-ray Disc (hereinafter referred to as a BD) are becoming available in the market, for example, which are high quality DVDs capable of recording a large quantity of information.

Reading (reproducing) information from the optical recording medium and writing (recording) information on the optical recording medium are performed by using an optical pickup device. Since a plurality of types of optical recording media are available as described above, optical pickup devices capable of reading or writing information on a plurality of types of optical recording media are being developed intensely in these years.

Optical recording media such as a CD, a DVD, a BD and the like have different thicknesses of transparent cover layers for protecting a recording layer. For example, the thickness of the transparent cover layer is 1.2 mm for a CD, 0.6 mm for a DVD and 0.1 mm for a BD. The optical pickup device that can read or write information on optical recording media having different thicknesses of transparent cover layers as described above has a problem of occurrence of spherical aberration.

In addition, optical recording media having a plurality of recording layers in the thickness direction of the optical recording medium are being developed intensely in particular for an optical recording medium such as a BD for high density recording. When the optical pickup device is used for reading information from the optical recording medium having a plurality of recording layers, there may be a problem of occurrence of spherical aberration, since thicknesses of the transparent cover layers (here, an intermediate layer between recording layers is also referred to as a transparent cover layer) are different depending on a position of the recording layer.

Furthermore, the problems of spherical aberration as described above are apt to be conspicuous particularly in an optical pickup device using a blue color light source that requires an objective lens having a large numerical aperture (NA). Recently, there are an increasing number of requests for an optical pickup device capable of correcting spherical aberration appropriately.

For this reason, many optical pickup devices having a spherical aberration correction mechanism used for correcting spherical aberration have been developed conventionally. For example, there is a conventional optical pickup device of a type in which a beam expander with two lenses that one is at least movable is disposed in an optical system for correcting spherical aberration or a type in which a liquid crystal element is disposed in an optical system and a voltage to be applied to the liquid crystal element is controlled for correcting spherical aberration so that a wavefront of light that passed through the liquid crystal element has arbitrary phase distribution. Other than that, there is an optical pickup device in which a collimator lens disposed in an optical system is driven in an optical axis direction so that a converging or diverging state of a light beam is changed for correcting spherical aberration.

Furthermore, in the conventional optical pickup device having the spherical aberration correction mechanism as described above, setting of the spherical aberration correction mechanism for correcting spherical aberration appropriately is determined by checking a jitter signal, an RF signal, a focus error signal (a FE signal) or the like, for example. Note that the setting of the spherical aberration correction mechanism is determined so that jitter becomes minimum if the jitter signal is used or that a signal amplitude of the RF signal or the FE signal becomes maximum if the signal is used.

However, in case of the structure in which the jitter signal, the RF signal, the FE signal or the like is used for determining setting of the spherical aberration correction mechanism, a polarity of the generated spherical aberration is unknown only by checking the signal data. Therefore, there is a problem that it takes long time to determine the setting of the spherical aberration correction mechanism because it may happen to repeat changing of the setting of the spherical aberration correction mechanism and confirming of the signal data more than necessary for obtaining an appropriate setting of the spherical aberration correction mechanism (i.e., setting for correcting spherical aberration appropriately).

Concerning this point, JP-A-2006-403 80 discloses an optical recording apparatus having a focus servo by using a knife edge method for reading and writing information on a recording medium having at least one recording layer. The apparatus includes a knife edge oscillation unit for oscillating a knife edge, a spherical aberration correction signal generation unit for generating a spherical aberration correction signal by detecting positive or negative or unevenness with respect to a reference level from an oscillation of a focus error signal generated by the oscillation of the knife edge, and a correction unit for correcting spherical aberration by using the spherical aberration correction signal. According to this document, it is possible to detect generation quantity and polarity of spherical aberration in real time, so that the setting of the spherical aberration correction mechanism can be determined promptly and the above-mentioned problem can be solved.

However, the structure disclosed in JP-A-2006-40380 requires the knife edge oscillation unit for oscillating the knife edge. For this reason, there are problems that the number of drive mechanisms to be provided to the optical pickup device increases and that the structure of the optical pickup device becomes complicated and that cost of the device increase.

## SUMMARY OF THE INVENTION

An object of the present invention is to provide an optical pickup device having a spherical aberration correction mechanism in which setting of the spherical aberration correction mechanism can be determined promptly with a simple structure.

An optical pickup device according to an embodiment of the present invention includes a light source, an objective lens used for condensing a light beam emitted from the light source onto at least one recording layer of an optical recording medium, a spherical aberration correction mechanism used for correcting spherical aberration generated in the light beam emitted from the light source, an optical detection part for receiving reflection light reflected by the optical recording medium, an actuator for moving the objective lens in the direction approaching or separating from the optical recording medium, a signal processing part for generating a reflection light quantity signal corresponding to intensity of the reflection light and a focus error signal from an electric signal output by the optical detection part, and a control part for controlling at least the actuator and the spherical aberration correction mechanism. A process performed by the control part for determining setting of the spherical aberration correction mechanism includes an objective lens moving process of moving the objective lens in the direction approaching the optical recording medium or in the direction separating from the optical recording medium, a checking process of checking in which shift direction the timing when the reflection light quantity signal becomes a peak is shifted from the timing when the S-shaped curve of the focus error signal crosses zero by using the reflection light quantity signal and the focus error signal derived from the recording layer on which information is read or written obtained by the objective lens moving process, and a setting changing process of changing current setting of the spherical aberration correction mechanism in accordance with the shift direction checked in the checking process in the case where it is decided that setting of the spherical aberration correction mechanism should be changed from the current setting.

According to this structure, when setting of the spherical aberration correction mechanism is determined, the current setting of the spherical aberration correction mechanism is changed in accordance with a shift direction in which the timing when the reflection light quantity signal becomes a peak is shifted from the timing when the S-shaped curve of the focus error signal crosses zero (in other words, the timing is shifted forward or backward). More specifically, according to the structure of the present invention, a polarity of the spherical aberration that is currently generated is checked and then setting of the spherical aberration correction mechanism is changed. Therefore, a wasteful change of setting of the spherical aberration correction mechanism can be reduced. Thus, setting of the spherical aberration correction mechanism for correcting the spherical aberration appropriately can be determined promptly. In addition, the knife edge oscillation unit that is necessary for the conventional structure is not necessary for the structure of the present invention, and setting of the spherical aberration correction mechanism can be determined promptly with a simple structure of the optical pickup device.

Furthermore, as a preferable embodiment of the present invention as to the optical pickup device having the above-mentioned structure, a result of the checking process is used for deciding whether or not setting of the spherical aberration correction mechanism should be changed from the current setting, if it is decided that the shift is generated by the checking process, the setting changing process is performed, and the process performed by the control part further includes a process of repeating the objective lens moving process, the checking process and the setting changing process until it is decided that the shift is not generated by the checking process when the setting changing process is performed. Thus, the structure in which setting of the spherical aberration correction mechanism for correcting spherical aberration appropriately can be determined promptly can be realized easily.

Furthermore, as a preferable embodiment of the present invention as to the optical pickup device having the above-mentioned structure, the checking process further includes a process of checking a shift quantity between the timing when the S-shaped curve crosses zero and the timing when the reflection light quantity signal becomes a peak, and the setting changing process further includes a process of changing current setting of the spherical aberration correction mechanism in accordance with the shift quantity.

According to this structure, the current setting of the spherical aberration correction mechanism is further changed in accordance with the shift quantity. The shift quantity of the timing when the reflection light quantity signal becomes a peak from the timing when the S-shaped curve of the focus error signal crosses zero is related to a magnitude of spherical aberration. Therefore, the structure of the present invention enables more prompt determination of setting of the spherical aberration correction mechanism.

Furthermore, as a preferable embodiment of the present invention as to the optical pickup device having the above-mentioned structure, the spherical aberration correction mechanism has a movable lens moving in an optical axis direction. There is a method of correcting spherical aberration by using the movable lens as the spherical aberration correction mechanism that is used for correcting spherical aberration and by changing a converging or diverging state of the light beam entering the objective lens. The present invention can also be effective in case of using the spherical aberration correction mechanism that uses such a method.

Furthermore, as a preferable embodiment of the present invention as to the optical pickup device having the above-mentioned structure, the movable lens is a collimator lens, and the spherical aberration correction mechanism includes the collimator lens and a collimator lens drive part that enables the collimator lens to move in the optical axis direction. According to this structure, the spherical aberration correction mechanism can have a simple structure. Furthermore, also in case of having such a spherical aberration correction mechanism, setting of the spherical aberration correction mechanism can be determined promptly with a simple structure of the optical pickup device.

As described above, according to the present invention, as to an optical pickup device having a spherical aberration correction mechanism used for correcting spherical aberration, setting of the spherical aberration correction mechanism can be determined promptly. Furthermore, such an optical pickup device can be realized with a simple structure.

## BRIEF DESCRIPTION OF THE DRAWINGS

Fig. 1 is a schematic diagram showing a structure of an optical pickup device according to an embodiment of the present invention;

Fig. 2 is a schematic plan view showing a structure of a collimator lens drive unit provided to the optical pickup device of the embodiment;

Fig. 3 is a schematic diagram showing a structure of a light receiving area of a photodetector provided to the optical pickup device of the embodiment;

Fig. 4A is a schematic diagram showing a relationship between an S-shaped curve of a focus error signal and a reflection light quantity signal obtained in the case where a collimator lens is disposed at a predetermined reference position and an objective lens is moved in a direction separating from an optical recording medium in the optical pickup device of the embodiment, which shows signals derived from a recording layer L0;

Fig. 4B is a schematic diagram showing a relationship between an S-shaped curve of a focus error signal and a reflection light quantity signal obtained in the case where a collimator lens is disposed at a predetermined reference position and an objective lens is moved in a direction separating from an optical recording medium in the optical pickup device of the embodiment, which shows signals derived from a recording layer L1; and

Fig. 5 is a flowchart showing an example of a flow of determining the setting of the spherical aberration correction mechanism so that the spherical aberration can be corrected appropriately in the optical pickup device of the embodiment.

## DETAILED DESCRIPTION OF THE PREFERRED EMBODIMENTS

Hereinafter, an embodiment of the present invention will be described in detail with reference to the attached drawings. However, the embodiment described here is merely an example, and the present invention is not limited to the embodiment described here.

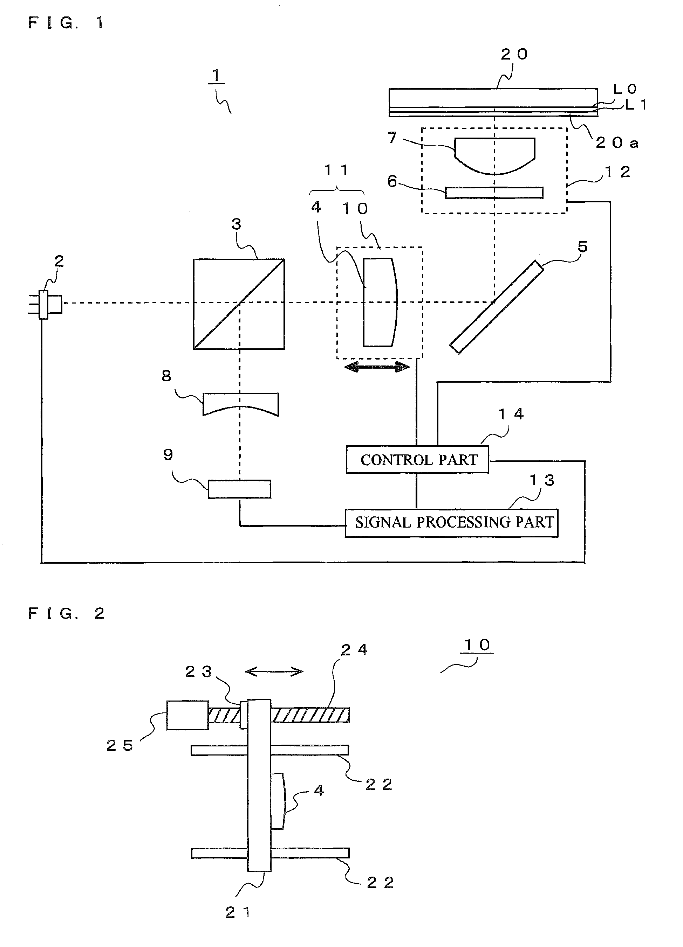

Fig. 1 is a schematic diagram showing a structure of an optical pickup device according to an embodiment of the present invention. The optical pickup device 1 can read and write information on an optical recording medium 20 having two recording layers L0 and L1. As shown in Fig. 1, an optical system of the optical pickup device 1 includes a light source 2, a polarizing beam splitter 3, a collimator lens 4, an upstand mirror 5, a quarter wavelength plate 6, an objective lens 7, a cylindrical lens 8 and a photodetector 9.

The light source 2 is made up of a semiconductor laser, and a wavelength of a laser beam emitted from the semiconductor laser is selected appropriately in accordance with a type of the optical recording medium 20 supported by the optical pickup device 1. For example, a type of the light source 2 (semiconductor laser) is selected so that the laser beam of 405 nm band, 650 nm band or 780 nm band is emitted from the light source 2 if the optical pickup device 1 supports a BD, a DVD or a CD, respectively.

Although the optical pickup device 1 of the present embodiment has one light source 2 so as to support one type of the optical recording medium 20, the present invention is not limited to this structure. If the optical pickup device should read and write information on a plurality of types of the optical recording media 20, it may have a plurality of light sources 2 and an additional optical element such as a dichroic prism for making their optical axes coincide.

The polarizing beam splitter 3 has a function of passing one of two linear polarization lights having polarization directions perpendicular to each other and reflect the other. As to the optical pickup device 1 of the present embodiment, a forward laser beam passes through the polarizing beam splitter 3 while a backward laser beam is reflected by the same.

The collimator lens 4 is disposed so that its position can be moved in the optical axis direction, and a converging or diverging state of the laser beam passing through the collimator lens 4 can be changed. The optical pickup device 1 of the present embodiment can support the optical recording medium 20 having two recording layers L0 and L1 as described above. Since the recording layer L0 and the recording layer L1 have different thicknesses of transparent cover layers 20a (here, an intermediate layer between the recording layer L0 and the recording layer L 1 is also referred to as a transparent cover layer), reproduction quality or record quality of information may be deteriorated due to spherical aberration when the optical pickup device 1 is used for reproducing or recording information on the optical recording medium 20.

Therefore, as to the optical pickup device 1 of the present embodiment, the collimator lens 4 is disposed so that it can be moved in the optical axis direction. Thus, a converging or diverging state of the laser beam entering the objective lens 7 is changed for correcting spherical aberration. In other words, the collimator lens 4 and a collimator lens drive unit 10 that enables the collimator lens 4 to move in the optical axis direction as described above constitute a spherical aberration correction mechanism 11.

Fig. 2 is a schematic plan view showing a structure of the collimator lens drive unit 10 provided to the optical pickup device 1 of the embodiment. As shown in Fig. 2, the collimator lens drive unit 10 includes a movable holder 21, two guide shafts 22, a lead nut 23, a screw 24 and a stepping motor 25.

The movable holder 21 that holds the collimator lens 4 is supported by the two guide shafts 22 in a slidable manner. In addition, the lead nut 23 is fixed to the movable holder 21, and the screw 24 engages with the lead nut 23. The screw 24 can be driven to rotate by the stepping motor 25.

Therefore, when the stepping motor 25 rotates the screw 24, the movable holder 21 slides along the guide shaft 22 in accordance with a rotation direction of the screw 24 so that a position of the collimator lens 4 is moved. On this occasion, the movement quantity of the movable holder 21 can be controlled correctly as stepping quantity of the stepping motor 25 from a reference position that is set to be a movement reference of the collimator lens 4. Note that control of the collimator lens drive unit 10 is performed by a control part 14 that will be described later.

With reference to Fig. 1 again, the upstand mirror 5 has a function of reflecting the laser beam from the collimator lens 4 so as to change its optical axis direction to the direction perpendicular to the recording layers L0 and L1 of the optical recording medium 20.

The quarter wavelength plate 6 is disposed so that incident light having a linear polarization is changed to have a circular polarization. In addition, light having a circular polarization entering the quarter wavelength plate 6 is changed to have a linear polarization. Note that the quarter wavelength plate 6 works as an optical isolator together with the polarizing beam splitter 3.

The objective lens 7 condenses an incident laser beam onto the recording layer L0 (or the recording layer L1) of the optical recording medium 20. The objective lens 7 as well as the quarter wavelength plate 6 is mounted on an actuator 12. Then, they can be moved by the actuator 12 in a focus direction parallel to the optical axis direction and in a direction parallel to a radial direction of the optical recording medium 20. Thus, it is possible to perform focusing control so that a focal position of the objective lens 7 is always controlled to be on the recording layer of optical recording medium 20. In addition, it is also possible to perform tracking control so that a beam spot formed and condensed by the objective lens 7 is always controlled to follow a track formed on the optical recording medium 20. In addition, it is also possible to perform focus jump so that the focal position of the objective lens 7 is jumped from a recording layer to another recording layer (e.g., from the recording layer L0 to the recording layer L1).

The cylindrical lens 8 has a function of giving astigmatism to the laser beam that is reflected by the optical recording medium 20 and is led to the photodetector 9.

The photodetector 9 receives the laser beam reflected by the optical recording medium 20 in a light receiving area (not shown) so as to convert it into an electric signal. The electric signal output by from the photodetector 9 is sent to a signal processing part 13.

The signal processing part 13 processes the electric signal output by the photodetector 9 so as to generate an RF signal, a focus error signal (FE signal), a tracking error signal (TE signal) and the like. Note that the RF signal is used for reading out information while the FE signal and the TE signal are used for the focusing control and the tracking control described above.

The control part 14 has a function of controlling the entire operation of the optical pickup device 1. For example, the control part 14 performs drive control of the light source 2 and control of the spherical aberration correction mechanism 11 and the actuator 12 based on information output by the signal processing part 13.

The general structure of the optical pickup device 1 is as described above. The optical pickup device 1 of the present embodiment is designed so that spherical aberration is not generated in the laser beam emitted from the light source 2 if the focal point of the objective lens 7 coincides an intermediate point between the two recording layers L0 and L1 of the optical recording medium 20 (e.g., if the optical recording medium 20 is a BD, the transparent cover layer 20a has a thickness of 0.1 mm for L0 and a thickness of 0.075 mm for L1, and therefore a thickness of the transparent cover layer 20a at an intermediate point is 0.0875 mm) in the case where the collimator lens 4 is disposed at a predetermined reference position.

In this case, there will be a problem of deterioration of quality in reproducing or recording information due to occurrence of spherical aberration if the information is tried to be read or written on the recording layer L0 or the recording layer L1 in the state where the collimator lens 4 is at a predetermined reference position. Therefore, it is necessary to use the spherical aberration correction mechanism 11 for correcting spherical aberration. The optical pickup device 1 of the present embodiment has a feature that can promptly determine the setting of the spherical aberration correction mechanism 11 so that spherical aberration can be corrected appropriately. Hereinafter, this feature will be described.

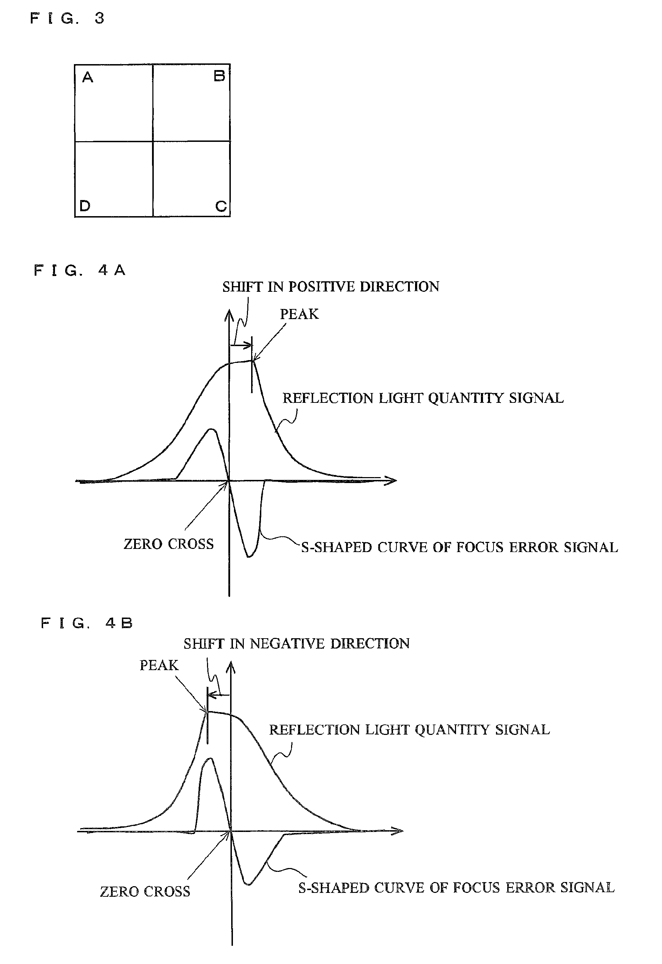

Fig. 3 is a schematic diagram showing a structure of the light receiving area of the photodetector 9 provided to the optical pickup device 1 of the embodiment. As shown in Fig. 3, the photodetector 9 has the light receiving area that is divided into four areas A, B, C and D. Furthermore, two signals are obtained by processing electric signals obtained from the four areas A to D by the signal processing part 13, and the two signals are used for determining a set state of the spherical aberration correction mechanism 11 (corresponding to the position setting of the collimator lens 4 in the optical axis direction in the present embodiment) so that spherical aberration can be corrected appropriately.

Here, the two signals mean a reflection light quantity signal generated in accordance with intensity of reflection light reflected by the optical recording medium 20 and the focus error signal (FE signal) generated for performing the above-mentioned focusing control. Here, when the signals obtained from the individual areas A, B, C and D are denoted by SA, SB, SC and SD, the reflection light quantity signal and the focus error signal can be expressed as below.

$$\text{Reflection light quantity signal} = SA + SB + SC + SD$$

$$\text{Focus error signal} = (SA + SC) - (SB + SD)$$

Furthermore, sub light receiving areas are disposed so as to sandwich the light receiving area formed by the areas A to D for obtaining the tracking error signal in the photodetector 9 of the present embodiment. However, the sub light receiving areas are omitted since they are not relevant directly to the present invention.

Figs. 4A and 4B are schematic diagrams showing relationships between an S-shaped curve of a focus error signal and a reflection light quantity signal obtained in the case where a collimator lens 4 is disposed at a predetermined reference position and the objective lens 7 is moved in a direction separating from the optical recording medium 20. Furthermore, Fig. 4A shows signals derived from a recording layer L0, and Fig. 4B shows signals derived from a recording layer L1.

As shown in Figs. 4A and 4B, when the collimator lens 4 is disposed at a predetermined reference position, the S-shaped curve of the focus error signal loses balance without being symmetric with respect to a zero cross point on the recording layer L0 and on the recording layer L1 since spherical aberration occurs in the light beam to be projected onto the recording layers. Furthermore, the timing when the S-shaped curve of the focus error signal crosses zero does not coincide the timing when the reflection light quantity signal becomes a peak, i.e., they are shifted from each other. Here, the direction in which the timing when the reflection light quantity signal becomes a peak is shifted from the timing when the S-shaped curve of the focus error signal crosses zero is opposite between the case of the recording layer L0 (Fig. 4A) and the case of the recording layer L1 (Fig. 4B).

The direction in which the timing when the reflection light quantity signal becomes a peak is shifted from the timing when the S-shaped curve of the focus error signal crosses zero as described above depends on a polarity of the generated spherical aberration. Therefore, when the setting of the spherical aberration correction mechanism 11 is determined, the timing when the S-shaped curve of the focus error signal crosses zero and the timing when the reflection light quantity signal becomes a peak are obtained so that the direction of the shift between the timings is checked. Then, it can be known which direction the setting of the spherical aberration correction mechanism 11 should be changed from the current setting so that the spherical aberration correction mechanism 11 can be set appropriately (for correcting spherical aberration appropriately). Thus, the setting of the spherical aberration correction mechanism 11 for correcting spherical aberration appropriately can be determined promptly.

Furthermore, the shift quantity of the timing when the reflection light quantity signal becomes a peak from the timing when the S-shaped curve of the focus error signal crosses zero is quantity that varies in accordance with a magnitude of the spherical aberration. Therefore, a relationship between the shift quantity and quantity of change in the setting of the spherical aberration correction mechanism 11 necessary for canceling the generated shift is obtained by an experiment or the like and is stored in advance in such a manner readable by the control part 14. Thus, it can be known how the setting of the spherical aberration correction mechanism 11 should be changed by finding the shift quantity. In other words, setting of the spherical aberration correction mechanism 11 for correcting spherical aberration appropriately can be determined promptly by detecting the shift quantity.

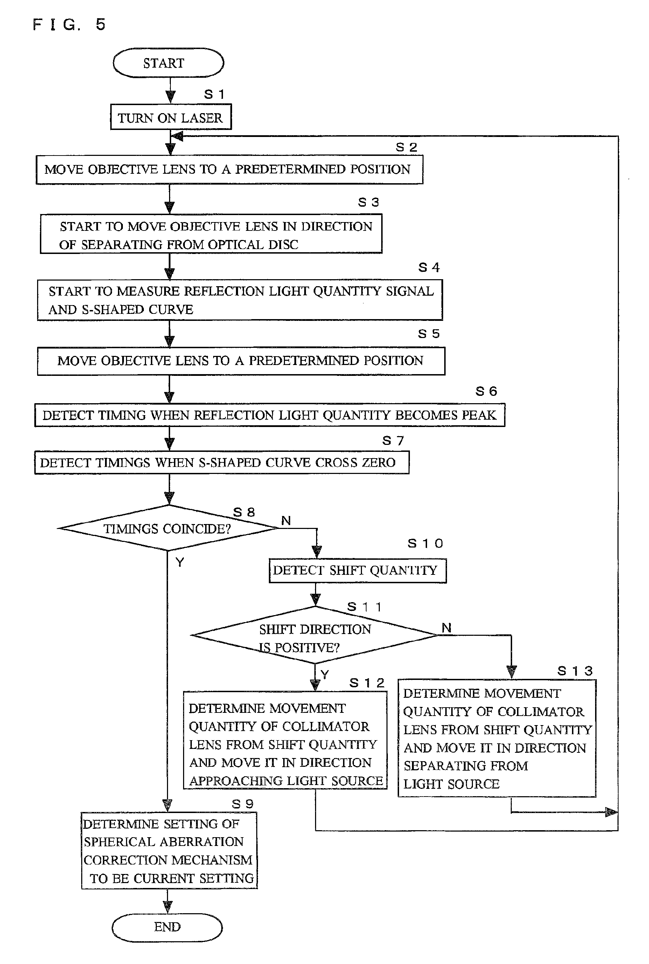

Next, an example of a flow of determining process of setting the spherical aberration correction mechanism 11 so that spherical aberration can be corrected appropriately in the optical pickup device 1 of the present embodiment will be described with reference to a flowchart shown in Fig. 5.

In order to determine the setting of the spherical aberration correction mechanism 11 so that spherical aberration can be corrected appropriately, the control part 14 first makes the light source 2 emit the laser beam so that the above-mentioned S-shaped curve of the focus error signal and the reflection light quantity signal can be obtained (Step S1). Then, the control part 14 makes the actuator 12 move the objective lens 7 in the direction of separating from the optical recording medium 20. Thus, the objective lens 7 is moved to a predetermined position so as to obtain the S-shaped curve of the focus error signal and the reflection light quantity signal derived from the recording layer on which information is read or written (Step S2).

Although the S-shaped curve of the focus error signal and the reflection light quantity signal derived from the recording layer on which information is read or written is obtained by moving the objective lens 7 in the direction of separating from the optical recording medium 20 in the present embodiment, it is possible to adopt another structure in which the objective lens 7 is moved in the direction of approaching the optical recording medium 20 so that the above-mentioned S-shaped curve of the focus error signal and the reflection light quantity signal can be obtained.

When the objective lens 7 is moved to a predetermined position, the objective lens 7 starts to move in the direction of separating from the optical recording medium 20 (Step S3), and simultaneously the control part 14 starts to measure the reflection light quantity signal and the S-shaped curve of the focus error signal (Step S4). Then, the objective lens 7 is moved to a predetermined position (Step S5). After that, the control part 14 detects the timing when the reflection light quantity signal derived from the recording layer on which information is read or written becomes a peak (Step S6). Further in parallel with it, the control part 14 also detects the timing when the S-shaped curve of the focus error signal derived from the recording layer on which information is read or written crosses zero (Step S7).

Furthermore, when the focus error signal and the reflection light quantity signal derived from the recording layer on which information is read or written are obtained in the present embodiment, both signals derived from the recording layer L0 and the recording layer L1 are obtained, and it is determined which recording layer the signal is derived from based in the order of obtaining the signals. Thus, the signal derived from the recording layer on which information is read or written is determined. However, without limiting to this structure, it is possible to another structure in which the objective lens 7 is moved so that only the signal derived from the recording layer on which information is read or written can be obtained.

After the timing when the reflection light quantity signal becomes a peak and the timing when the S-shaped curve of the focus error signal crosses zero are detected, the control part 14 decides whether or not both the timings coincide with each other (Step S8). The decision whether or not the timings coincide with each other can be performed by calculating a differential value between the timings. It should be decided that the timings coincide with each other if the differential value is within a predetermined range and that they do not coincide with each other if the differential value is not within the predetermined range. If the timings coincide with each other, the control part 14 decides that the setting of the spherical aberration correction mechanism 11 for correcting spherical aberration appropriately is the current setting (Step S9), and the process for determining the setting of the spherical aberration correction mechanism 11 is finished.

On the other hand, if it is decided that the timings do not coincide with each other, the control part 14 detects the shift quantity between the timings (Step S10). Further in parallel with it, it is checked whether or not the timing when the reflection light quantity signal becomes a peak is shifted from the timing when the S-shaped curve of the focus error signal crosses zero in a positive direction (Step S11). Note that in the present embodiment, a shift in a positive direction means that the timing of the peak appears later than the timing of the zero cross, and a shift in a negative direction means that the timing of the peak appears earlier than the timing of the zero cross (see Figs. 4A and 4B).

After that, the control part 14 decides in which direction and by how much quantity the current setting of the spherical aberration correction mechanism 11 should be changed based on the shift direction and the shift quantity, so that the current setting of the spherical aberration correction mechanism 11 is changed. More specifically, if the shift direction is a positive direction, the collimator lens drive unit 10 drives the collimator lens 4 in the direction approaching the light source 2 by the quantity determined in accordance with the shift quantity (Step S12). In addition, if the shift direction is a negative direction, the collimator lens drive unit 10 drives the collimator lens 4 in the direction separating from the light source 2 by the quantity determined in accordance with the shift quantity (Step S13). After that, Steps S2 to S8 and Steps S 10 to S 13 are repeated until the timing when the reflection light quantity signal becomes a peak coincides the timing when the S-shaped curve of the focus error signal crosses zero.

Note that the movement quantity determined by detecting the shift quantity is calculated from experimental data that is obtained in advance. Even if the movement quantity of the collimator lens 4 is determined based on the shift quantity like the present embodiment, spherical aberration is not always corrected appropriately by moving the collimator lens 4 by the determined movement quantity because of a variation of a thickness of the transparent cover layer 20a of the optical recording medium 20 or other factors, for example. Therefore, Steps S2 to S8 and Step S10 to S 13 may be repeated as described above.

As described above, according to the optical pickup device 1 of the present embodiment, it can be known which direction the setting of the spherical aberration correction mechanism 11 should be changed any time when it is necessary to change the setting from the current setting in case of performing the determination process of the setting of the spherical aberration correction mechanism 11 so that spherical aberration can be corrected appropriately. In addition, it is also known to what extent a set quantity should be changed from the shift quantity. Therefore, setting of the spherical aberration correction mechanism 11 for correcting spherical aberration appropriately can be determined promptly.

Although the optical recording medium has two recording layers in the embodiment described above, the present invention can also be applied naturally to the case where the optical pickup device supporting an optical recording medium having more recording layers. In addition, spherical aberration occurs also in case of an optical pickup device that can read or write information on a plurality of types of optical recording media having different thicknesses of transparent cover layers. The present invention can also be applied naturally to such an optical pickup device.

Although the spherical aberration correction mechanism has the structure including the collimator lens and the collimator lens drive unit that enables the collimator lens to move in the optical axis direction in the present embodiment, the present invention is not limited to this structure. The structure can be modified variously within the scope of the present invention without deviating from the object of the same. For example, the spherical aberration correction mechanism may be a mechanism in which spherical aberration is corrected by a beam expander having at least one movable lens moving in the optical axis direction or a mechanism in which spherical aberration is corrected by a liquid crystal element.

According to the present invention, as to the optical pickup device having the spherical aberration correction mechanism for correcting spherical aberration, setting of the spherical aberration correction mechanism for correcting spherical aberration appropriately can be determined promptly. Therefore, it is a useful technique for an optical pickup device that is required to correct spherical aberration.

**Claims**

1. An optical pickup device comprising:

> a light source;
> an objective lens used for condensing a light beam emitted from the light source onto at least one recording layer of an optical recording medium;
> a spherical aberration correction mechanism used for correcting spherical aberration generated in the light beam emitted from the light source;
> an optical detection part for receiving reflection light reflected by the optical recording medium;
> an actuator for moving the objective lens in the direction approaching or separating from the optical recording medium;
> a signal processing part for generating a reflection light quantity signal corresponding to intensity of the reflection light and a focus error signal from an electric signal output by the optical detection part; and
> a control part for controlling at least the actuator and the spherical aberration correction mechanism, **characterized in that**
> a process performed by the control part for determining setting of the spherical aberration correction mechanism includes

>> an objective lens moving process of moving the objective lens in the direction approaching the optical recording medium or in the direction separating from the optical recording medium,
>> a checking process of checking in which shift direction the timing when the reflection light quantity signal becomes a peak is shifted from the timing when the S-shaped curve of the focus error signal crosses zero by using the reflection light quantity signal and the focus error signal derived from the recording layer on which information is read or written obtained by the objective lens moving process, and

a setting changing process of changing current setting of the spherical aberration correction mechanism in accordance with the shift direction checked in the checking process in the case where it is decided that setting of the spherical aberration correction mechanism should be changed from the current setting.

2. The optical pickup device according to claim 1, **characterized in that**
a result of the checking process is used for deciding whether or not setting of the spherical aberration correction mechanism should be changed from the current setting,
if it is decided that the shift is generated by the checking process, the setting changing process is performed, and
the process performed by the control part further includes a process of repeating the objective lens moving process, the checking process and the setting changing process until it is decided that the shift is not generated by the checking process when the setting changing process is performed.

3. The optical pickup device according to claim 1 or 2, **characterized in that**
the checking process further includes a process of checking a shift quantity between the timing when the S-shaped curve crosses zero and the timing when the reflection light quantity signal becomes a peak, and
the setting changing process further includes a process of changing current setting of the spherical aberration correction mechanism in accordance with the shift quantity.

4. The optical pickup device according to any one of claims 1 to 3, **characterized in that** the spherical aberration correction mechanism has a movable lens moving in an optical axis direction.

5. The optical pickup device according to claim 4, **characterized in that**
the movable lens is a collimator lens, and
the spherical aberration correction mechanism includes the collimator lens and a collimator lens drive part that enables the collimator lens to move in the optical axis direction.

FIG. 1

CONTROL PART

SIGNAL PROCESSING PART

FIG. 2

F I G. 3

F I G. 4 A

SHIFT IN POSITIVE DIRECTION

PEAK

REFLECTION LIGHT QUANTITY SIGNAL

ZERO CROSS

S-SHAPED CURVE OF FOCUS ERROR SIGNAL

F I G. 4 B

SHIFT IN NEGATIVE DIRECTION

PEAK

REFLECTION LIGHT QUANTITY SIGNAL

ZERO CROSS

S-SHAPED CURVE OF FOCUS ERROR SIGNAL

F I G. 5

```
                    ┌─────────────────┐
                    (     START       )
                    └─────────────────┘
                             │   S 1
                    ┌─────────────────┐
                    │  TURN ON LASER  │
                    └─────────────────┘
                             │                                          S 2
   ┌──────────────────────────────────────────────────────────────┐
   │  MOVE OBJECTIVE LENS TO A PREDETERMINED POSITION              │
   └──────────────────────────────────────────────────────────────┘
                             │                                 S 3
   ┌──────────────────────────────────────────────────┐
   │  START TO MOVE OBJECTIVE LENS IN DIRECTION        │
   │  OF SEPARATING FROM OPTICAL DISC                  │
   └──────────────────────────────────────────────────┘
                             │                                   S 4
   ┌──────────────────────────────────────────────────────┐
   │  START TO MEASURE REFLECTION LIGHT QUANTITY SIGNAL    │
   │  AND S-SHAPED CURVE                                   │
   └──────────────────────────────────────────────────────┘
                             │                                S 5
   ┌──────────────────────────────────────────────────┐
   │  MOVE OBJECTIVE LENS TO A PREDETERMINED POSITION  │
   └──────────────────────────────────────────────────┘
                             │                                     S 6
   ┌────────────────────────────────────────────────────────────┐
   │  DETECT TIMING WHEN REFLECTION LIGHT QUANTITY BECOMES PEAK  │
   └────────────────────────────────────────────────────────────┘
                             │                            S 7
   ┌──────────────────────────────────────────────┐
   │  DETECT TIMINGS WHEN S-SHAPED CURVE CROSS ZERO │
   └──────────────────────────────────────────────┘
```

TIMINGS COINCIDE?   S 8   N

Y

S 1 0   DETECT SHIFT QUANTITY

SHIFT DIRECTION IS POSITIVE?   S 1 1   N

Y   S 1 2

DETERMINE MOVEMENT QUANTITY OF COLLIMATOR LENS FROM SHIFT QUANTITY AND MOVE IT IN DIRECTION APPROACHING LIGHT SOURCE

S 1 3

DETERMINE MOVEMENT QUANTITY OF COLLIMATOR LENS FROM SHIFT QUANTITY AND MOVE IT IN DIRECTION SEPARATING FROM LIGHT SOURCE

S 9

DETERMINE SETTING OF SPHERICAL ABERRATION CORRECTION MECHANISM TO BE CURRENT SETTING

( END )

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006040380 A